Europäisches Patentamt

European Patent Office

Office européen des brevets

(19)

(11) Publication number: **0 075 887**
**B1**

# EUROPEAN PATENT SPECIFICATION

(12)

(45) Date of publication of patent specification: **27.12.85**

(51) Int. Cl.⁴: **B 29 C 45/14**

(21) Application number: **82108848.1**

(22) Date of filing: **24.09.82**

(54) **A method of manufacturing level vials.**

(30) Priority: **25.09.81 IL 63934**

(43) Date of publication of application:
**06.04.83 Bulletin 83/14**

(45) Publication of the grant of the patent:
**27.12.85 Bulletin 85/52**

(84) Designated Contracting States:
**AT CH DE FR IT LI SE**

(56) References cited:
**DE-A-2 123 472**
**DE-U-7 434 435**
**US-A-3 593 428**

(73) Proprietor: **MEPRO Kibbutz Hagoshrim
Mobile Post
Upper Galil 12 225 (IL)**

(72) Inventor: **Drori, Michael
Mobile Post
Kibbutz Hagoshrim Upper Galil (IL)**

(74) Representative: **Weickmann, Heinrich, Dipl.-Ing.
et al
Patentanwälte Dipl.-Ing. H.Weickmann Dipl.-
Phys.Dr. K.Fincke Dipl.-Ing. F.A.Weickmann
Dipl.-Chem. B. Huber Dr.-Ing. H. Liska Dipl.-
Phys.Dr. J. Prechtel Postfach 860820
D-8000 München 86 (DE)**

Courier Press, Leamington Spa, England.

## Description

The present invention concerns a method according to the preamble of claim 1 and a core manufactured and used in accordance with the method.

A method according to the preamble of claim 1 has been known from U.S. Patent No. 3,593,428.

After a vial body so moulded has cooled down it is removed from the injection mould, the core constituted by a pin is withdrawn. Furthermore, some markings or graduations have to be provided to give the position of a bubble when the level is in the right horizontal position. These markings are best done inside the cavity so as to prevent errors caused by parallax observation. One method of making such markings is by turning two or more annular grooves inside the cavity and inserting into said grooves marker rings with the aid of tweezers or other special tools. The annular grooves have a detrimental effect on the accuracy of the level because they cause a resistance against smooth movements of the bubble when bringing the level into the correct position.

Since the sensitivity of a level depends on the accuracy of the shape of the cavity, the manufacture of said cavity requires careful execution. The surface finish must be very high. Thus it can be seen that the manufacture of level vials is a complicated and expensive procedure requiring many manual and machine operations.

It is the object of the present invention to provide a method for making vials which is almost entirely performed in an injection moulding machine and thus requires little labor and yet to provide extremely sensitive vials by providing an accurate barrel-shaped cavity therein.

The accomplishment of this object is defined in claim 1 and the core manufactured and used in accordance with the method of the invention is characterized in claim 8.

The invention is illustrated by way of example in the accompanying drawings showing a longitudinal section of a level vial during its manufacture.

In an injection moulding machine having two moulding stations, a core 1 is moulded of an opaque thermoplastic material. This core 1 comprises an internal axial through-going bore 2 which is effected by moulding it around a pin (not shown). The main part of said core 1 has a barrel-like external profile 3 and two integral annular ribs 4 which are preferably but not necessarily of hook-like section as shown, said ribs being destinated to constitute marker rings. The outer end of core 1 is cylindrical at 5 and has a shoulder 6 adjacent part 3. An integral flange 7 is provided at the outermost end of the core 1. After the core 1 has been moulded it is transferred to the second injection station in the injection moulding machine, and here the body 8 of the vial is moulded of transparent material having a lower softening temperature than that of the core 1.

After cooling, the said pin is removed from the core 1 whereby the core 1 can collapse so that it can be withdrawn by pulling it outwards from body 8. The annular ribs 4 will thereby be severed from the core 1 and will remain in the body 8 having been anchored therein during the moulding of the latter.

The vial is now completed by inserting vial fluid therein and plugging the opening, the shoulder 6 providing a stop for the plug.

The vial body 8 may be of circular, square or any other desired cross-section. Furthermore, if more than two markers are required, core 1 will be moulded with more than two annular ribs 4.

It can be seen that this method of manufacturing a vial is quick, accurate, efficient and requires a minimum of handling. In fact only the withdrawal of the core 1, the filling of the cavity and the plugging of it require manual operation.

Although the provision of shoulder 6 on the core 1 makes for a stop for the plug when the vial body 8 is cast, said stop may also be eliminated and a plug having a flange may be provided.

If desired, the markings for the bubble can be made by a suitable method other than providing the core with annular ribs, e.g. markings moulded integrally with the vial body 8, painting or printing externally or internally or marking the body 8 in any other suitable way.

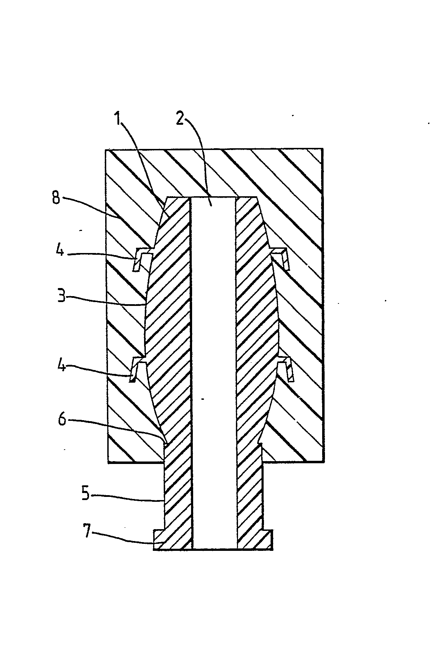

## Claims

1. A method for manufacturing level vials by injecting a transparent thermoplastic material into a mould in which a core (1) is provided, said method being characterized by the following steps:

a. moulding the core (1) having a barrel-like shape of an opaque thermoplastic material around a pin in a double-injection moulding machine;

b. transferring said core (1) into the mould in the same machine and moulding the vial body (8) around it of the transparent thermoplastic material, the softening temperature of said transparent thermoplastic material being lower than that of said opaque thermoplastic material;

c. after cooling and removing said body (8), withdrawing first said pin from said core (1) and said core then from said body (8).

2. A method as claimed in claim 1 wherein said core (1) is moulded with at least two spaced integral annular ribs (4) which, when said core (1) is withdrawn from said body (8), are severed from the core (1) and remain in the body (8) to constitute markings for a bubble.

3. A method as claimed in claim 1 wherein markings for a bubble are made by painting or printing on the outside of said body (8).

4. A method as claimed in claim 1 wherein the markings for a bubble are made by painting or printing inside the cavity left by said core (1).

5. A method as claimed in any one of the preceding claims wherein said core (1) has an integral shoulder (6) near one end.

6. A method as claimed in any one of the preceding claims, wherein said core (1) is provided with a cylindrical extension (5) having a flange (7) at its end.

7. A method as claimed in any one of the preceding claims, wherein the cross-section of said body (8) is circular, square or of any desired shape.

8. A core (1) for a level vial made by the method as claimed in any one of the preceding claims, having a barrel-like shape with a longitudinally through-going bore (2) and at least two spaced integral annular ribs (4).

## Revendications

1. Procédé pour fabriquer des fioles graduées par injection d'une matière thermoplastique transparente dans un moule dans lequel est prévu un noyau (1), ledit procédé étant caractérisé par les étapes suivantes:

a) le moulage du noyau (1) en forme de tonneau en une matière thermoplastique opaque autour d'une broche dans une machine de moulage à double injection,

b) le transfert dudit noyau (1) dans le moule de la même machine et le moulage du corps (8) de la fiole en une matière thermoplastique transparente autour de ce dernier, la température d'amollissement de ladite matière thermoplastique transparente étant inférieure à celle de ladite matière thermoplastique opaque,

c) après refroidissement et retrait dudit corps (8), le retrait d'abord de ladite broche dudit noyau (1) et ensuite dudit noyau dudit corps (8).

2. Procédé selon la revendication 1, dans lequel ledit noyau (1) est moulé avec au moins deux nervures annulaires espacées et d'un seul tenant (4) qui, lorsque ledit noyau (1) est retiré dudit corps (8), sont sectionnées du noyau (1) et restent dans le corps (8) pour constituer des marques pour une bulle.

3. Procédé selon la revendication 1, dans lequel les marques destinées à une bulle sont réalisées par peinture ou impression sur le côté extérieur dudit corps (8).

4. Procédé selon la revendication 1, dans lequel les marques destinées à une bulle sont réalisées par peinture ou impression à l'intérieur de la cavité laissée dans ledit noyau (1).

5. Procédé selon l'une quelconque des revendications précédentes, dans lequel ledit noyau (1) comprend un épaulement d'un seul tenant (6) à proximité d'une extrémité.

6. Procédé selon l'une quelconque des revendications précédentes, dans lequel ledit noyau (1) est muni d'un prolongement cylindrique (5) comprenant und collerette (7) à son extrémité.

7. Procédé selon l'une quelconque des revendications précédentes, dans lequel la section transversale dudit corps (8) est circulaire, carrée ou de toute forme désirée.

8. Noyau (1) pour fille graduée, réalisé au moyen du procédé tel que revendiqué dans l'une quelconque des revendications précédentes, présentant une forme en tonneau avec un alésage longitudinal traversant (2) et au moins deux nervues annulaires (4) d'un seul tenant et espacées.

## Patentansprüche

1. Verfahren zum Herstellen von Meßphiolen durch Einspritzen eines transparenten thermoplastischen Materials in eine Form, in der ein Kern (1) vorgesehen ist, gekennzeichnet durch die folgenden Schritte:

a. Gießen des Kerns (1) mit einer kegelförmigen Gestalt aus einem undurchsichtigen thermoplastischen Material um einen Stift in einer Doppel-Spritzgußmaschine,

b. Übertragen des Kerns (1) in die Form in derselben Maschine und Gießen des Phiolenkörpers (8) um diesen aus dem transparenten thermoplastischen Material, wobei die Erweichungstemperatur des transparenten thermoplastischen Materials tiefer als die des undurchsichtigen thermoplastischen Materials liegt,

c. nach dem Abkühlen und Entfernen des Körpers (8) zunächst der Stift aus dem Kern (1) und sodann der Kern aus dem Körper (8) gezogen wird.

2. Verfahren nach Anspruch 1, bei dem der Kern (1) mit wenigstens zwei beabstandeten einstückigen Rippen (4) gegossen wird, die beim Herausziehen des Kerns (1) aus dem Körper (8) vom Kern (1) abgetrennt werden und zur Bildung von Markierungen für eine Blase im Körper verbleiben.

3. Verfahren nach Anspruch 1, bei dem Markierungen für eine Blase durch Aufmalen oder Aufdrucken auf die Außenseite des Körpers (8) hergestellt werden.

4. Verfahren nach Anspruch 1, bei dem die Markierungen für eine Blase durch Aufmalen oder Aufdrucken innerhalb des durch den Kern (1) belassenen Hohlraums hergestellt werden.

5. Verfahren nach den vorhergehenden Ansprüchen, bei dem der Kern (1) nahe einem Ende eine einstückige Schulter (6) besitzt.

6. Verfahren nach den vorhergehenden Ansprüchen, bei dem der Kern (1) mit einem zylindrischen Ansatz (5) versehen ist, der an seinem Ende einen Flansch (7) besitzt.

7. Verfahren nach den vorhergehenden Ansprüchen, bei dem der Querschnitt des Körpers (8) kreisförmig, quadratisch oder in gewünschter Weise gestaltet ist.

8. Kern (1) für eine nach den vorhergehenden Ansprüchen hergestellte Meßphiole, der eine kegelförmige Gestalt mit einer Längsdurchgangsbohrung (2) sowie zwei beabstandete einstückige ringförmige Rippen (4) besitzt.